# EUROPEAN PATENT SPECIFICATION

(11) **EP 3 753 413 B1**
(45) Date of publication and mention of the grant of the patent: **11.10.2023**
(21) Application number: 19181608.1
(22) Date of filing: 21.06.2019
(51) Int. Cl.: A21C 3/02

(54) **DEVICE FOR DEPOSITING DOUGH**
VORRICHTUNG ZUM ABLEGEN VON TEIG
DISPOSITIF DE DÉPÔT DE PÂTE

(43) Date of publication of application: 23.12.2020
(73) Proprietor: Radie B.V., 4104 BC Culemborg (NL)
(72) Inventor: VAN BLOKLAND, Johannes Josephus Antonius, 1251 BG Laren (NL)
(74) Representative: IP Maison

(56) References cited:
- EP-A1- 2 647 289
- CA-A1- 2 207 578
- CA-C- 2 207 578
- CN-B- 102 273 498
- DE-A1-102009 022 247
- GB-A- 1 290 704
- US-A- 1 645 155
- US-A- 3 556 280
- US-A- 4 582 472
- US-A- 4 821 634

## Description

The present invention relates to a device for depositing dough, and in particular, for producing a dough laminate from a dough sheet. Devices for producing dough laminates are known in the art. One example is given in the European patent EP 2460410, disclosing a device for lapping dough. The device described in this patent has several advantages over the prior art, but it is mainly intended for lapping dough over large widths. US 3 556 280 A and DE 10 2009 022247 A1 also disclose similar dough depositing devices.

In some configurations, there is little space available for installing a dough lapping device in a dough line, and may not always be a need for a large lapping device. In these cases, retracting systems may be applied, in particular reciprocate-retract systems. However, a demand for small sized devices and compact solution remains, possibly with a simple and robust construction and a minimal number of parts.

It is in particular, but evidently not limited for these applications, that the present invention aims to find a solution for. The invention does so by proposing a supply conveyor for a dough sheet, guided over a path, said path comprising a nose bar that is translatable over a first distance, a transmission, for translating the nose bar, the transmission comprising a rod, rotatably coupled to a first rotatable arm at a first coupling point on the rod, rotatably coupled to a second rotatable arm at a second coupling point on the rod, and rotatably coupled to the nose bar at a third coupling point on the rod, wherein the second coupling point is at a second distance from the first coupling point; the third coupling point being at third distance from the first coupling point; and the third distance is larger than the second distance; and a drive, for driving at least one of the first and/or the second rotatable arms.

The device according to the present invention forms a very compact system for depositing dough. The dough may be deposited on a substrate such as another conveyor, a baking tray or any other substrate. The dough may be a dough sheet or may comprise separate dough products. According to the present invention, by driving at least one of the first or second rotatable arm, the rod is moved, and therewith the nose bar of the device. The first and second arm may be chosen with different lengths, dimensioned such that the third coupling point is moved along an essentially straight path. Such dimensions allow a third coupling point without the necessity of further intermediate coupling parts, and furthermore, keep the mechanic forces that may cause vibrations the smallest. With the wording "length" an effective length is meant in this application, that is the distance between coupling points, axes of rotation or fixation points. Loose ends or projecting parts of elements that do not change the technical functioning of the device are not to fall under this definition.

The coupling of the rod to the nose bar at the third coupling point may be a direct or indirect coupling. The rod may be rotatably connected to or close to the nose bar, or by means of an interface, such as a sledge. Such sledge may further support a part of the supply conveyor belt.

In an embodiment, a plane through the axis of rotation of the first rotatable arm and the axis of rotation of the second rotatable arm is parallel to the plane in which the nose bar is movable. However, configurations wherein the axis of rotation of the first rotatable arm is higher or lower than the axis of rotation of the second rotatable arm are thinkable too.

In yet a further embodiment, the second arm is longer than the first arm. In a preferred embodiment of the present invention, the length of the rod and the two arms, and the locations of the rotatable connections are dimensioned such that the path of the third connection point is straight.

According to the present invention the length of the first arm, the length of the second arm and the distance between the rotation point of the first arm and the second arm relate as 2:5:4, and the rod is twice as long as the second arm, and the second arm is coupled to the rod halfway to the rods length. In a particular embodiment, the first, second and third coupling points may be on a straight line.

With this configuration, a compact and simple machine can be obtained. In particular, only three moving parts are required for obtaining the movement of the nose bar, being the first arm, the second arm and the rod.

In yet a further embodiment, the supply conveyor is guided over a path that also comprises a tail bar that is coupled to the nose bar at a distance of the nose bar, wherein the conveyor belt is zig-zagged around both bars, for keeping the total length of the path of the conveyor belt constant when the nose bar and tail bar are translated. With this construction, a constant tension on the belt can relatively easily be maintained. The construction further contributes to a simple and compact construction.

Preferably, a straight projection of the translation of the third coupling point on the plane through the axis of rotation of the first rotatable arm and the axis of rotation of the second rotatable arm extends outside the area between the axis of rotation of the first rotatable arm and the axis of rotation of the second rotatable arm, and preferably falls outside the area between the axis of rotation of the first rotatable arm and the axis of rotation of the second rotatable arm. This way, the nose bar moves mainly outside the area where the transmission is located, and a second conveyor, on which the laminated dough is to be placed, can be placed under the path of translation of the nose bar.

The nose bar may be translatable above a transporter, such as a transporter for baking trays or in particular above a second conveyor belt with a direction of conveyance parallel to or perpendicular to the direction of conveyance of the supply conveyor belt. Such second conveyor belt serves to receive the dough that is deposited by the first conveyor. The dough may be applied on the transporter in a laminated way, or dough products may be arranged in a predetermined way on the transporter.

The device may be provided with a drive for driving the supply conveyor belt, in particular arranged under the level of the nose bar. Providing the device with a drive leads to an autonomous device that can be placed autonomically in a dough line and requires no coupling with other parts of the dough line for being driven. The supply conveyor for a dough sheet may be guided over a path comprising an uphill trajectory. This uphill part can be placed at least partially under a preceding part of the dough line in order to transfer a dough sheet to be laminated.

The device according to the invention may have multiple purposes. It may be may be used for laminating a dough sheet, wherein multiple modes are thinkable. For that reason a retracting speed of the nose bar, a forward speed of the nose bar and a conveyance speed of the supply conveyor may be independently controllable.

In a simple way of use, the device according to the invention is operated with a constant speed of the supply conveyor. In those cases, the retracting speed of the nose bar may be higher than the forward speed. Such mode can be used for laminating dough, but also for placing separate dough products on a baking tray.

It may also be beneficial when a retracting speed of the nose bar and a forward speed of the nose bar are equal. In those cases, the supply conveyor may be operated width an intermittent speed. In particular in those cases, a buffer for dough and more in particular for a dough sheet, may be arranged up stream of the supply conveyor. The device may also be provided with a dough cutter, for cutting dough on the supply conveyor, in a direction perpendicular to a direction of conveyance of the dough conveyor. Such cutter may be applied when the device according to the invention is to be used to position multiple dough pieces, in particular parts of a dough sheet, are to be deposited on a substrate in a roof tile manner.

The invention will now be elucidated into more detail with reference to the following figures. Herein:
- Figure 1 shows a first embodiment of a device according to the present invention; and
- Figure 2 shows a second embodiment of a device according to the present invention.

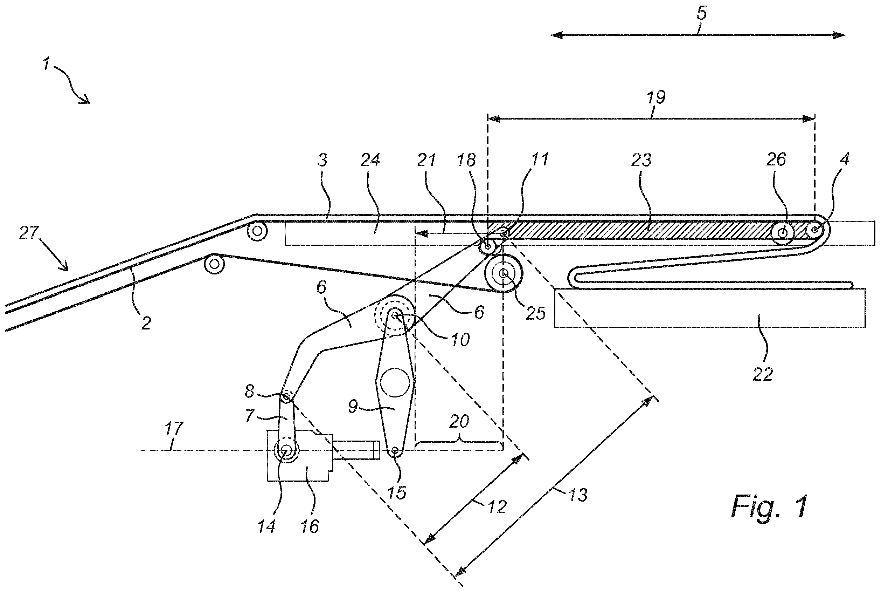

Figure 1 shows a device 1 for laminating dough, comprising a supply conveyor 2 for a dough sheet 3, guided over a path, said path comprising a nose bar 4 that is translatable over a first distance 5, a transmission 6, 7, 8, 9, 10, for translating the nose bar, the transmission comprising a rod 6, rotatably coupled to a first rotatable arm 7 at a first coupling point 8 on the rod 6, rotatably coupled to a second rotatable arm 9 at a second coupling point 10 on the rod, rotatably coupled to the nose bar 4 at a third coupling point 11 on the rod 6, wherein the second coupling point 10 is at a second distance 12 from the first coupling point 8, the third coupling point 11 being at third distance 13 from the first coupling point 8; and the third distance 13 is larger than the second distance 12. The device also has a drive 16, for driving at least one of the first and/or the second rotatable arms 7, 9, either around rotation point 14 or 15. As visible in the figure, a plane 17 through the axis of rotation 8 of the first rotatable arm 7 and the axis of rotation 15 of the second rotatable arm 9 is parallel to the plane 5 in which the nose bar 4 is movable.

The supply conveyor 2 is guided over a path that also comprises a tail bar 18 that is coupled to the nose bar 4 at a distance 19 of the nose bar 4, wherein the conveyor belt is zig-zagged around both bars, for keeping the total length of the path of the conveyor belt 2 constant when the nose bar 4 and tail bar 18 are translated. A straight projection 20 of the translation 21 of the third coupling point on the plane through the axis of rotation 14 of the first rotatable arm 7 and the axis of rotation 15 of the second rotatable arm 9 extends outside the area between the axis of rotation 14 of the first rotatable arm 7 and the axis of rotation 15 of the second rotatable arm 9.

The nose bar 4 is translatable above a second conveyor belt 22, with a direction of conveyance perpendicular to the direction of conveyance of the supply conveyor belt 2. The nose bar 4 is coupled to the rod 6 by means of a slide 23, that also carries the nose bar 4. The slide 23 bar is further guided by a rotational bearing 26 through a guide 24. The device further comprises a drive 25 for driving the supply conveyor belt. The supply conveyor 2 for a dough sheet is guided over a path comprising an uphill trajectory 27, which allows to transfer the dough sheet from a preceding processing device in the dough line to the laminating device according to the invention.

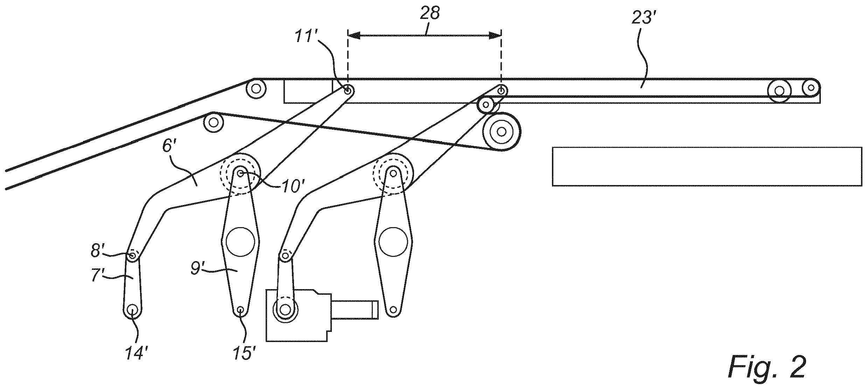

Figure 2 shows an alternative embodiment, wherein for reasons of readability only references are indicated that differ from figure 1. Instead of a rotational bearing 26 and a guide 24, the slide 23' is supported by a second rod 6' at a distance 28 from the coupling with the rod 6, rotatably coupled to a rotatable arm 7' at a coupling point 8' on the rod 6', rotatably coupled to a rotatable arm 9' at a coupling point 10' on the rod 6', rotatably coupled to the nose bar 4 at a coupling point 11' on the rod 6'. The two parallel transmissions take away the need for the guide 24 in the embodiment of figure 1, and offer the advantage of less protruding device-parts around the nose-bar 4.

## Claims

1. Device (1) for depositing dough, comprising:
- A supply conveyor (2) for a dough sheet (3), guided over a path, said path comprising a nose bar (4) that is translatable over a first distance (5);
**characterised in that,**
- A transmission (6,7,8,9,10), for translating the nose bar (4), the transmission (6,7,8,9,10) comprising a rod (6),
o rotatably coupled to a first rotatable arm (7) at a first coupling point (8) on the rod (6);
o rotatably coupled to a second rotatable arm (9) at a second coupling point (10) on the rod (6),
o rotatably coupled to the nose bar (4) at a third coupling point (11) on the rod (6),
wherein
o the second coupling point (10) is at a second distance (12) from the first coupling point (8);
o the third coupling (11) point being at a third distance (13) from the first coupling point (8); and
o the third distance (13) is larger than the second distance (12); and
- A drive (16), for driving at least one of the first and/or the second rotatable arms (7,9),
wherein by driving at least one of the first or second rotatable arm (7,9), the rod (6) is moved, and therewith the nose bar (4) of the device (1), wherein the length of the first arm (7), the length of the second arm (9) and the distance between the rotation point of the first arm (7) and the second arm (9) relate as 2:5:4, and wherein the rod (6) is twice as long as the second arm (9), and the second arm (9) is coupled to the rod (6) halfway to the rods (6) length.

2. Device (1) according to claim 1, wherein a plane (17) through the axis of rotation (8) of the first rotatable arm (7) and the axis of rotation (15) of the second rotatable arm (9) is parallel to the plane (5) in which the nose bar (4) is movable.

3. Device (1) according to any of the preceding claims, wherein the length of the rod (6) and the two arms (7,9), and the locations of the rotatable connections are dimensioned such that the path of the third connection point is straight.

4. Device (1) according to any of the preceding claims, wherein the supply conveyor (2) is guided over a path that also comprises a tail bar (18) that is coupled to the nose bar (4) at a distance (19) of the nose bar (4), wherein the conveyor belt (2) is zig-zagged around both bars, for keeping the total length of the path of the conveyor belt (2) constant when the nose bar (4) and tail bar (18) are translated.

5. Device (1) according to any of the preceding claims, wherein a straight projection (20) of the translation (21) of the third coupling point on the plane through the axis of rotation (14) of the first rotatable arm (7) and the axis of rotation (15) of the second rotatable arm (9) extends outside the area between the axis of rotation (14) of the first rotatable arm (7) and the axis of rotation (15) of the second rotatable arm (9), and preferably falls outside the area between the axis of rotation (14) of the first rotatable arm (7) and the axis of rotation (15)of the second rotatable arm (9).

6. Device (1) according to any of the preceding claims, wherein the nose bar (4) is translatable above a transporter, such as a carrier for baking trays or a second conveyor belt (22), in particular above a second conveyor belt (22) with a direction of conveyance parallel or perpendicular to the direction of conveyance of the supply conveyor belt (2).

7. Device (1) according to any of the preceding claims, comprising a drive(25) for driving the supply conveyor belt (2), in particular arranged under the level of the nose bar (4).

8. Device (1) according to any of the preceding claims, wherein the supply conveyor (2) for a dough sheet, is guided over a path comprising an uphill trajectory (27).

9. Device (1) according to any of the preceding claims, comprising two identical transmissions, coupled to the nose bar (4) at a mutual horizontal distance, wherein at least one of the transmissions comprises a drive, and in particular wherein the other transmission is a dummy.

10. Device (1) according to any of the preceding claims, configured to be operated with a constant of the conveyor belt (2) speed.

11. Device (1) according to any of the preceding claims, wherein a retracting speed of the nose bar (4), a forward speed of the nose bar (4) and a conveyance speed of the supply conveyor (2) are independently controllable.

12. Device (1) according to any of the preceding claims, comprising a buffer for a dough sheet (3), arranged up stream of the supply conveyor (2).

13. Device (1) according to any of the preceding claims, comprising a dough cutter, for cutting dough on the supply conveyor, in a direction perpendicular to a direction of conveyance of the dough conveyor.

## Patentansprüche

1. Vorrichtung (1) zum Ablegen von Teig, umfassend:
- Ein Zuführungsförderband (2) für ein Teigband (3), das über einen Pfad geführt wird, wobei der Pfad eine Nasenleiste (4) umfasst, die über eine erste Entfernung (5) verschiebbar ist;
**gekennzeichnet durch**
- Ein Getriebe (6, 7 8 9 ,10) zur Verschiebung der Nasenleiste (4), das Getriebe (6, 7, 8, 9, 10) umfassend einen Stab (6),
o der drehbar um einen ersten Dreharm (7) an einem ersten Kupplungspunkt (8) am Stab (6) gekoppelt ist;
o der drehbar um einen zweiten Dreharm (9) an einem zweiten Kupplungspunkt (10) am Stab (6) gekoppelt ist;
o der drehbar mit der Nasenleiste (4) an einem dritten Kupplungspunkt (11) am Stab (6) gekoppelt ist,
wobei
o der zweite Kupplungspunkt (10) sich in einer zweiten Entfernung (12) vom ersten Kupplungspunkt (8) befindet
o der dritte Kupplungspunkt (11) sich in einer dritten Entfernung (13) vom ersten Kupplungspunkt (8) befindet; und
o die dritte Entfernung (13) größer ist als die zweite Entfernung (12); und
- Einen Antrieb (16) zum Antreiben von mindestens einem des ersten und/oder des zweiten Dreharms (7, 9),
wobei durch den Antrieb von mindestens einem des ersten oder zweiten Dreharms (7, 9) der Stab (6) und damit die Nasenleiste (4) der Vorrichtung (1) bewegt wird, wobei die Länge des ersten Arms (7), die Länge des zweiten Arms (9) und der Abstand zwischen dem Drehpunkt des ersten Arms (7) und des zweiten Arms (9) ein Verhältnis von 2:5:4 aufweisen und wobei der Stab (6) die zweifache Länge des zweiten Arms (9) aufweist und der zweite Arm (9) in der Hälfte der Länge des Stabes (6) an den Stab (6) gekoppelt ist.

2. Vorrichtung (1) gemäß Anspruch 1, wobei eine Ebene (17) durch die Drehachse (8) des ersten Dreharms (7) und die Drehachse (15) des zweiten Dreharms (9) parallel zur Ebene (5) verläuft, in der die Nasenleiste (4) bewegt werden kann.

3. Vorrichtung (1) gemäß einem der vorstehenden Ansprüche, wobei die Länge des Stabes (6) und der beiden Arme (7, 9) und die Stellen der drehbaren Verbindungen so dimensioniert sind, dass der Pfad des dritten Verbindungspunkts gerade ist.

4. Vorrichtung (1) gemäß einem der vorstehenden Ansprüche, wobei das Zuführungsförderband (2) über einen Pfad geführt wird, der auch eine Schwanzleiste (18) umfasst, die an die Nasenleiste (4) in einem Abstand (19) der Nasenleiste (4) gekoppelt ist, wobei das Förderband (2) um beide Leisten herum eine Zick-Zack-Form aufweist, um die Gesamtlänge des Pfades des Förderbands (2) konstant zu halten, wenn die Nasenleiste (4) und die Schwanzleiste (18) verschoben werden.

5. Vorrichtung (1) gemäß einem der vorstehenden Ansprüche, wobei eine gerade Projektion (20) der Verschiebung (21) des dritten Kupplungspunktes auf der Ebene durch die Drehachse (14) des ersten Dreharms (7) und die Drehachse (15) des zweiten Dreharms (9) sich aus der Fläche zwischen der Drehachse (14) des ersten Dreharms (7) und der Drehachse (15) des zweiten Dreharms (9) hinaus erstreckt und vorzugsweise außerhalb des Bereichs zwischen der Drehachse (14) des ersten Dreharms (7) und der Drehachse (15) des zweiten Dreharms (9) liegt.

6. Vorrichtung (1) gemäß einem der vorstehenden Ansprüche, wobei die Nasenleiste (4) oberhalb einer Transportvorrichtung, wie einem Träger für Backbleche oder einem zweiten Förderband (22), insbesondere oberhalb eines zweiten Förderbands (22) mit einer Förderrichtung parallel oder senkrecht zur Förderrichtung des Zuführungsförderbands (2) verschiebbar ist.

7. Vorrichtung (1) gemäß einem der vorstehenden Ansprüche, die einen Antrieb (25) zum Antreiben des Zuführungsförderbands (2) umfasst, der insbesondere unter der Ebene der Nasenleiste (4) angeordnet ist.

8. Vorrichtung (1) gemäß einem der vorstehenden Ansprüche, wobei das Zuführungsförderband (2) für ein Teigband über einen Pfad geführt wird, der eine ansteigende Verlaufsbahn (27) umfasst.

9. Vorrichtung (1) gemäß einem der vorstehenden Ansprüche, die zwei identische Getriebe umfasst, die an die Nasenleiste (4) in einem horizontalen Abstand zueinander gekoppelt sind, wobei mindestens eines der Getriebe einen Antrieb umfasst, und wobei insbesondere das andere Getriebe ein Blindgetriebe ist.

10. Vorrichtung (1) gemäß einem der vorstehenden Ansprüche, die so konfiguriert ist, dass sie mit einer konstanten Geschwindigkeit des Förderbands (2) betrieben werden kann.

11. Vorrichtung (1) gemäß einem der vorstehenden Ansprüche, wobei eine Rückzugsgeschwindigkeit der Nasenleiste (4), eine Vorwärtsgeschwindigkeit der Nasenleiste (4) und eine Fördergeschwindigkeit des Zuführungsförderbands (2) unabhängig steuerbar sind.

12. Vorrichtung (1) gemäß einem der vorstehenden Ansprüche, die einen Puffer für ein Teigband (3) umfasst, der vorgeschaltet zum Zuführungsförderband (2) angeordnet ist.

13. Vorrichtung (1) gemäß einem der vorstehenden Ansprüche, die eine Teigschneidevorrichtung zum Schneiden von Teig auf dem Zuführungsförderband umfasst, in einer Richtung senkrecht zur einer Förderrichtung des Teigförderbands.

## Revendications

1. Dispositif (1) de dépôt de pâte, comprenant :
- un transporteur d'alimentation (2) pour une feuille de pâte (3), guidé sur un chemin, ledit chemin comprenant une barre avant (4) qui peut être déplacée en translation sur une première distance (5) ;
**caractérisé par**
- une transmission (6, 7, 8, 9, 10), pour déplacer en translation la barre avant (4), la transmission (6, 7, 8, 9, 10) comprenant une tige (6),
o couplée de manière rotative à un premier bras rotatif (7) au niveau d'un premier point d'accouplement (8) sur la tige (6) ;
o couplée de manière rotative à un second bras rotatif (9) au niveau d'un deuxième point d'accouplement (10) sur la tige (6),
o couplée de manière rotative à la barre avant (4) au niveau d'un troisième point d'accouplement (11) sur la tige (6),
dans lequel
o le deuxième point d'accouplement (10) est à une deuxième distance (12) du premier point d'accouplement (8)
o le troisième point d'accouplement (11) est à une troisième distance (13) du premier point d'accouplement (8) ; et
o la troisième distance (13) est plus grande que la deuxième distance (12) ; et
- un entraînement (16), pour entraîner au moins l'un des premier et/ou second bras rotatifs (7, 9),
dans lequel en entraînant au moins l'un du premier ou du second bras rotatif (7, 9), la tige (6) est déplacée, et avec celle-ci la barre avant (4) du dispositif (1), dans lequel le rapport entre la longueur du premier bras (7), la longueur du second bras (9) et la distance entre le point de rotation du premier bras (7) et du second bras (9) est de 2:5:4, et dans lequel la tige (6) est deux fois plus longue que le second bras (9), et le second bras (9) est couplé à la tige (6) à michemin de la longueur de la tige (6).

2. Dispositif (1) selon la revendication 1, dans lequel un plan (17) à travers l'axe de rotation (8) du premier bras rotatif (7) et l'axe de rotation (15) du second bras rotatif (9) est parallèle au plan (5) dans lequel se déplace la barre avant (4).

3. Dispositif (1) selon l'une quelconque des revendications précédentes, dans lequel la longueur de la tige (6) et des deux bras (7, 9), et les emplacements des liaisons rotatives sont dimensionnés de telle sorte que le chemin du troisième point de liaison est droit.

4. Dispositif (1) selon l'une quelconque des revendications précédentes, dans lequel le transporteur d'alimentation (2) est guidé sur un chemin qui comprend également une barre arrière (18) qui est couplée à la barre avant (4) à une distance (19) de la barre avant (4), dans lequel la bande transporteuse (2) est en zigzag autour des deux barres, pour maintenir constante la longueur totale du chemin de la bande transporteuse (2) lorsque la barre avant (4) et la barre arrière (18) sont déplacées en translation.

5. Dispositif (1) selon l'une quelconque des revendications précédentes, dans lequel une projection droite (20) de la translation (21) du troisième point d'accouplement sur le plan à travers l'axe de rotation (14) du premier bras rotatif (7) et l'axe de rotation (15) du second bras rotatif (9) s'étend à l'extérieur de la zone entre l'axe de rotation (14) du premier bras rotatif (7) et l'axe de rotation (15) du second bras rotatif (9), et se trouve de préférence en dehors de la zone entre l'axe de rotation (14) du premier bras rotatif (7) et l'axe de rotation (15) du second bras rotatif (9).

6. Dispositif (1) selon l'une quelconque des revendications précédentes, dans lequel la barre avant (4) peut être déplacée en translation au-dessus d'un transporteur, tel qu'un support pour plaques de cuisson ou une seconde bande transporteuse (22), en particulier au-dessus d'une seconde bande transporteuse (22) avec une direction de transport parallèle ou perpendiculaire à la direction de transport de la bande transporteuse d'alimentation (2).

7. Dispositif (1) selon l'une quelconque des revendications précédentes, comprenant un entraînement (25) pour entraîner la bande transporteuse d'alimentation (2), disposé en particulier sous le niveau de la barre avant (4).

8. Dispositif (1) selon l'une quelconque des revendications précédentes, dans lequel le transporteur d'alimentation (2) pour une feuille de pâte est guidé sur un chemin comprenant une trajectoire ascendante (27).

9. Dispositif (1) selon l'une quelconque des revendications précédentes, comprenant deux transmissions identiques, couplées à la barre avant (4) à une distance horizontale mutuelle, dans lequel au moins l'une des transmissions comprend un entraînement, et en particulier dans lequel l'autre transmission est factice.

10. Dispositif (1) selon l'une quelconque des revendications précédentes, configuré pour fonctionner avec une vitesse constante de la bande transporteuse (2).

11. Dispositif (1) selon l'une quelconque des revendications précédentes, dans lequel une vitesse de rétraction de la barre avant (4), une vitesse d'avancement de la barre avant (4) et une vitesse de transport du transporteur d'alimentation (2) sont contrôlables indépendamment.

12. Dispositif (1) selon l'une quelconque des revendications précédentes, comprenant un tampon pour une feuille de pâte (3), disposé en amont du transporteur d'alimentation (2).

13. Dispositif (1) selon l'une quelconque des revendications précédentes, comprenant un coupe-pâte, pour couper la pâte sur le transporteur d'alimentation, dans une direction perpendiculaire à une direction de transport du transporteur de pâte.
